# EUROPEAN PATENT APPLICATION

(11) **EP 4 175 242 A1**
(43) Date of publication of application: **03.05.2023**
(21) Application number: 22150799.9
(22) Date of filing: 10.01.2022
(51) Int. Cl.: H04L 41/0226, H04L 41/342, H04L 41/085, H04L 69/08, H04L 69/18, H04L 41/40, H04L 41/045, H04L 41/082

(54) **SYSTEM PROCESSING DEVICE AND METHOD FOR SUPPORTING A SOFTWARE-DEFINED NETWORKING ARCHITECTURE FOR A CONSTRAINED DEVICE**

(30) Priority: 28.10.2021 RO 202100655
(71) Applicant: NXP B.V., 5656 AG Eindhoven (NL)
(72) Inventor: Herber, Christian, Redhill, RH1 1QZ (GB); Velciu, Veronica, Redhill, RH1 1QZ (GB)
(74) Representative: Hardingham, Christopher Mark

(57) **Abstract**

A system configured to support software-defined networking, SDN, is described. The system comprises: a management client entity (310); main processing device (220, 320) operably connected to the management client entity (310) and arranged to communicate with the management client entity (310) using a first SDN protocol; a target server (330) running on a constrained device (228, 329) operably connected to the main processing device (220, 320) and arranged to communicate with the main processing device (320) using a second SDN protocol (242) that is different to the first SDN protocol. The main processing device (220, 320) comprises a data store (370) configured to perform as an interface between the first SDN protocol and the second SDN protocol (242).

## Description

### Field of the invention

The field of the invention relates to a system and a main processing device in which a constrained device, e.g., a micro-controller unit (MCU) is integrated into a complex software-defined networking (SDN) architecture and a method therefor.

### Background of the invention

8-/16-/32-bit microcontroller units (MCUs) and other similar devices are known as 'constrained devices' as they do not have sufficient resources to implement complex data stores. For example, the constrained devices have a lack of either a filesystem, a large random access memory (RAM) and/or non-volatile memory (NVM), computer processing unit (CPU) power, etc. It is known that unconstrained devices, i.e., devices that are not constrained in lacking one or more of the above components, use heavy-weight protocols, such as RESTCONF^{™} or NETCONF^{™} protocols, where data to support all of their required functionality is placed in data stores (i.e., large data bases of configuration data connected to one or more constrained device(s)).

Complex software-defined networking (SDN) architectures typically need to support such heavy-weight protocols in order to facilitate unconstrained devices. SDN technology is an approach to network management that enables dynamic, programmatically efficient network configuration in order to improve network performance and monitoring, making SDN function more like cloud computing than traditional network management architectures. Typical SDN solutions are targeted at high performance computation and networking devices. Solutions for constrained devices lack some of the capabilities that are present in mainstream SDN.

However, it is known that constrained devices can be used in SDN, and the CORECONF^{™} protocol was defined for that purpose. The CORECONF^{™} protocol supports a simple datastore model consisting of a single unified datastore. This datastore provides access to both configuration and operational data. Configuration updates performed on this datastore are reflected immediately or with a minimal delay as operational data. Alternatively, CORECONF^{™} servers may implement a more complex datastore model such as the Network Management Datastore Architecture (NMDA), as defined by RFC8342.

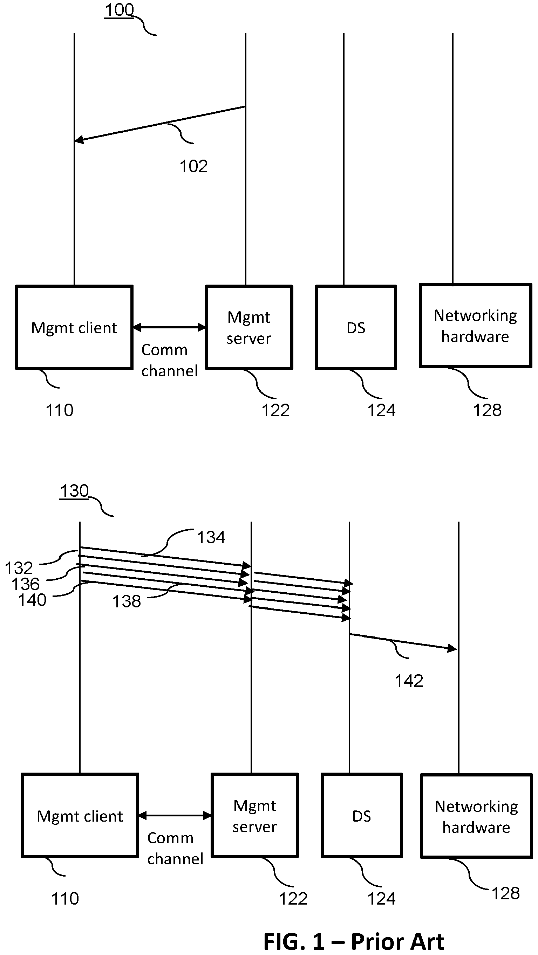

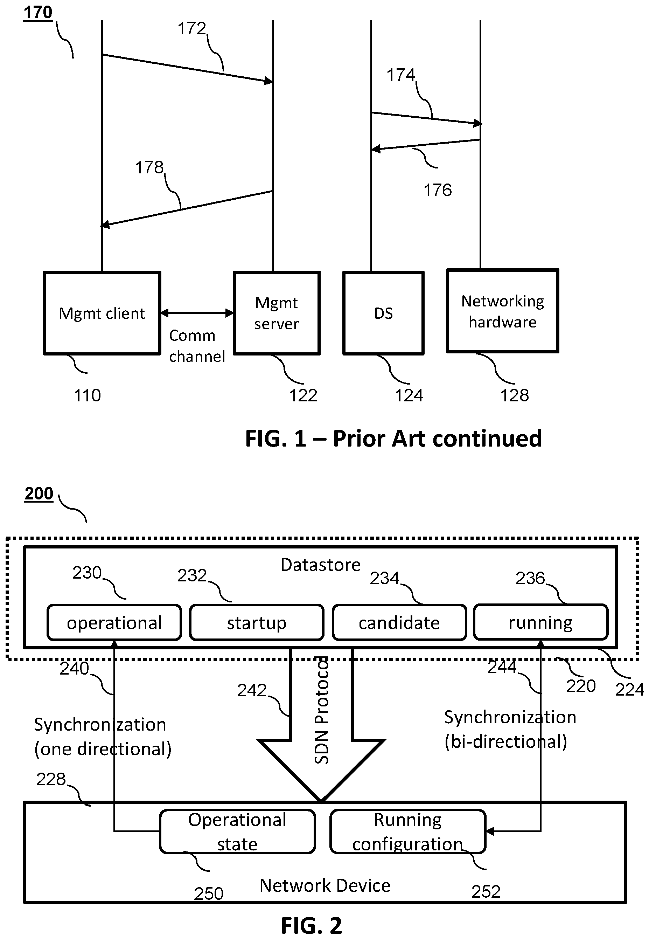

FIG. 1 illustrates various known NETCONF^{™} message sequence charts, including a start-up discovery process 100, a re-configuration process 130, and a state/configuration process 170. The known example of a NETCONF^{™} start-up discovery process message sequence 100 illustrates communications between a management client entity 110, over a communication channel to a management server 122 coupled to a data store 124, in turn coupled to networking hardware entity 128. The NETCONF^{™} start-up discovery process includes the management server 122 sending, for example, a '<HELLO> capabilities incl. constr. Dev.' Message to the management client entity 110. The purpose of the '<HELLO> capabilities incl. constr. Dev.' message is to advertise the capabilities of the device.

In the known example of a re-configuration process 130 the message sequence chart starts with a series of messages/instructions that are sent from the management client entity 110 to the management server 122 and thereafter to the data store 124 located within the unconstrained device. The series of messages/instructions include, namely: '<get-config> running' 132, '<edit-config> running' 134, '<lock> running' 136, '<lock> candidate' 138, and '<commit> candidate:running' 140. These messages 132-140 have the purpose of retrieving (get-config) device state information and managing ('edit-config', 'commit', 'lock') the device configuration, as known to those skilled in this field. At 142, the data store 124 sends a 'Config changed callback' message to the networking hardware entity 126. In the known example of a state/configuration change process 170, the management client entity 110 sends a '<get config> running-data node' message 172 to the management server 122 to retrieve (i.e., get-configuration) device state information of the running data node. The data store 124 reads out the status from the networking hardware entity 126 in messages 174, 176 and the management server 122 responds with a 'Data node instance = 1' message, which is an example response, saying that the value of the requested data node is '1', to the management client entity 110.

In the context of SDN, data is organized in a hierarchical data model, that comprises data nodes (i.e., nodes in the network that hold one or more values) and subnodes (that also hold one or more values) connected to the nodes, for example as an analogy to a tree structure.

A typical scenario is that a first protocol (such as NETCONF^{™}) is used to perform actions towards the datastores, and a second different protocol (such as CORECONF^{™}) may be used to manage the target device. However, there is no current mechanism to support a direct translation from NETCONF^{™} or similar protocols to CORECONF^{™} or similar protocols . There is also a general need to establish a more uniform approach to managing constrained devices, for example in the same way as unconstrained devices. The inventors have also identified a desire to provide substantially seamless configuration approaches between constrained and unconstrained devices.

### Summary of the invention

The present invention provides a system and a method supporting, say, a complex software-defined networking (SDN) architecture, the system comprising a target server running on a constrained device running a second SDN protocol to communicate with a main processing device running a first SDN protocol to a client management entity, where the main processing device includes a data store and where the main processing device and data store are configured to perform as an interface between the first SDN protocol and the second SDN protocol, as described in the accompanying claims. Specific embodiments of the invention are set forth in the dependent claims. These and other aspects of the invention will be apparent from and elucidated with reference to the embodiments described hereinafter.

### Brief description of the drawings

Further details, aspects and embodiments of the invention will be described, by way of example only, with reference to the drawings. In the drawings, like reference numbers are used to identify like or functionally similar elements. Elements in the figures are illustrated for simplicity and clarity and have not necessarily been drawn to scale.
FIG. 1 illustrates various known NETCONF^{™} message sequence charts, including a start-up discovery process, a re-configuration process, and a state/configuration process.
FIG. 2 illustrates an example of a main processing device having a data store and a remote datastore mapping architecture, adapted according to example embodiments of the invention.
FIG. 3 illustrates one example of an architecture overview with an adapted main processing device having a data store, according to example embodiments of the invention.
FIG. 4 illustrates an adapted NETCONF^{™} start-up discovery process message sequence chart, according to example embodiments of the invention.
FIG. 5 illustrates an adapted NETCONF^{™} re-configuration process message sequence chart, according to example embodiments of the invention.
FIG. 6 illustrates an adapted NETCONF^{™} state/configuration change by polling process message sequence chart, according to example embodiments of the invention.
FIG. 7 illustrates an adapted NETCONF^{™} state/configuration change by notification process message sequence chart, according to example embodiments of the invention.
FIG. 8 illustrates an adapted NETCONF^{™} state/configuration change with no caching process message sequence chart, according to example embodiments of the invention.
FIG. 9 illustrates an adapted NETCONF^{™} target mapping to an internal device process message sequence chart, according to example embodiments of the invention.
FIG. 10 illustrates an adapted NETCONF^{™} target mapping to an external device process message sequence chart, according to example embodiments of the invention.

### Detailed description

Examples of the present invention provide a system configured to support software-defined networking, SDN. Examples of the present invention aim to solve the general need to establish a more uniform approach to managing constrained devices, for example in the same way as unconstrained devices, through provision of a main processing device that includes a data store that is configured to function as an interface between two SDN protocols, for example between a SDN Central Network Configuration (CNC) entity and a management client running a first protocol, such as NETCONF^{™} and a constrained device running a second protocol such as CORECONF^{™}. The system comprises: a management client entity; a main processing device with a data store operably connected to the management client entity and arranged to communicate with the management client entity using a first SDN protocol; and a constrained device comprising a target server operably connected to the main processing device and arranged to communicate with the main processing device using a second SDN protocol that is different to the first SDN protocol. The main processing device comprises a data store configured to perform as an interface between the first SDN protocol and the different second SDN protocol.

In this manner, an additional component, namely a main processing device with an internal data store is used that, in some examples, may perform some of the missing features and functionality of a downstream SDN protocol. In the context of examples of the invention, such missing features provided by the main processing device with an internal data store may encompass one, more or all constrained device configurations. In some examples, these may include, at least one of: startup configurations, candidate configurations, operational configurations, running configurations. In some examples, the constrained device may only be left with its running configuration that is functioning inside it. In some examples, a stored configuration may be applied from the data store to the constrained device, e.g., copying the start-up configuration to the constrained device after start-up.

Furthermore, by using a main processing device with a data store, data store features that, say, allow differentiation between user configuration and operational state may be used within the system. In addition, complex processing chains may be created for converting a configuration state to an operational state. Thus, in this manner, examples of the invention provide an alternative solution to supporting a direct translation between two different protocols, such as from NETCONF^{™} to CORECONF^{™}. Furthermore, in this manner, examples of the invention provide a mechanism to establish a more uniform approach to managing constrained devices, for example in a similar manner to unconstrained devices.

Examples of the present invention are applicable to, but not limited to, an architecture that benefits from facilitating transparent management of constrained devices in the same or similar manner as other unconstrained devices in the system, for example where SDN is to be deployed and a mix of MPU and MCU devices should be managed. Examples of the present invention may also include a system that involves bridging from one SDN protocol to another SDN protocol with the main processing device and associated data store being configured to perform as an intermediate interface therebetween.

Examples of the present invention are applicable to, but not limited to, an application in the automotive field, where there exists a need to re-configure the constrained device in a case of a failure, a need to re-configure the constrained device for different usage scenarios, e.g., parking, battery charging, driving, updating the constrained device (e.g., MCU), a need to re-configure the constrained device because of dynamic changes such as new services provided. However, it is envisaged that the concepts described herein may be equally employed in industrial or Internet of Things type applications. Advantageously, examples of the present invention facilitate management of constrained devices, whilst not compromising the capabilities available to the SDN controller. This allows the SDN controller to make use of data stores for both unconstrained and constrained devices.

In some examples, the main processing device may be configured to read operational state data from the constrained device (hence a uni-directional synchronization as shown in FIG. 2). Furthermore, the main processing device may be configured to read and also send running configuration data from/to the constrained device (hence a bi-directional synchronization as shown in FIG. 2). In some examples, startup configurations and candidate configurations do not reside in the constrained device, but in some examples of the invention it is envisaged that they may be 'virtualized' by the main processing device and stored in the main processing device's data store. For example, at boot-up, the startup configuration may be loaded in the running configuration of the constrained device. Also, it is envisaged that in some examples, the candidate configuration may be stored in the data store of the main processing device and, when committed, it is sent directly into the running configuration of the constrained device. In this manner, the various states and configurations may be synchronized between the constrained device and the main processing device.

Furthermore, in some examples and as the first SDN protocol and the second SDN protocol are different, the main processing device may be configured to bridge communications between the different protocols, i.e., a first SDN protocol employed by the management client entity and a second SDN protocol employed by the constrained device for configuration and state retrieval data.

In some examples, the at least one running configuration of the constrained device may be copied to the main processing device, via a bi-directional communication link in order to maintain synchronization therebetween.

Because the illustrated embodiments of the present invention may, for the most part, be implemented using electronic components and circuits known to those skilled in the art, details will not be explained in any greater extent than that considered necessary as illustrated below, for the understanding and appreciation of the underlying concepts of the present invention and in order not to obfuscate or distract from the teachings of the present invention.

Referring first to FIG. 2, an example of a high-level abstraction view of a system 200 that employs remote data store mapping in a main processing device is illustrated, according to some example embodiments of the invention. The system 200 includes a main processing device 220 that comprises a data store 224. The data store 224 is parsed into separate functional operations and configurations, for example operational data 230, start-up data 232, candidate data 234 and running data 236. The system 200 further includes a constrained (network) device 228 connected to the main processing device 220 having a data store 224. The main processing device 220 communicates with the constrained (network) device 228 using a second SDN protocol 242, such as CORECONF^{™}, which is an uni-directional as the main processing device 220 is querying and configuring the constrained (network) device 228 and the constrained (network) device 228 is the device that contains the operational state, whereby through synchronization the operational state may be copied into the datastore so that it can be read out directly from there. In this manner, and in accordance with examples of the invention, copying a configuration between the two devices is equivalent to and encompasses synchronizing (using the second SDN protocol) the configuration between the two devices.

The constrained (network) device 228 includes one or more processor(s) that perform or monitor a running configuration 252 and monitor an operational state of the constrained (network) device 228. The running configuration 252 in the constrained (network) device 228 is copied (thereby synchronized) via a bi-directional communication link to the running configuration 236 in the data store 224 and the operational state 250 is synchronized via a uni-directional communication link to the operational data 230 in the data store 224. In this manner, the operational state and the running configuration between the constrained (network) device 228 and the data store 224 can be maintained in synchronization.

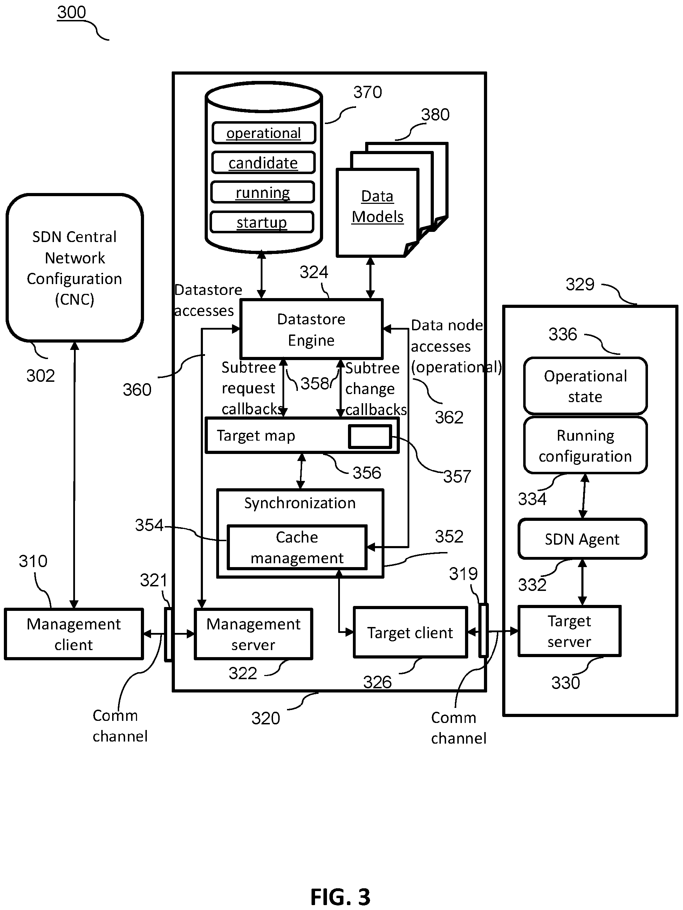

In some examples, the operational state and running configuration of the constrained device may change in an ad hoc manner due to, say, system events or protocols as link-layer negotiations, routing protocols, DHCP etc. In these examples, it is envisaged that a management client entity (such as management client 310 in FIG. 3) connected to the main processing device and operating a first SDN protocol, such as NETCONF^{™}, may not be involved. In those cases, in some examples, synchronization of states between devices may be employed where the synchronization may happen through polling (where the main processing device may be configured to read a piece of configuration periodically), notifications (where the main processing device may subscribe to notifications of configuration changes in the constrained device, which may send a message when something changes, or upon request (when the management client requests a part of config, it is read from the constrained device).

Referring now to FIG. 3, FIG. 3 illustrates one example of a system 300 architecture overview, according to some example embodiments of the invention. In this example, a SDN central network configuration (CNC) device 302 (e.g., a SDN controller that maintains a global view of the network configuration) communicates with a management client 310. In some examples, the SDN CNC device 302 may be considered as a management entity that calculates the desired configuration of all network elements and applies it through an SDN protocol. In this context, the SDN CNC device 302 may be considered as a client in the SDN protocol. The management client 310 communicates with a main processing device 320 over a first communication channel.

The main processing device 320 includes a first interface 321 for operably coupling to the management client entity 310 wherein the main processing device 320 comprises a management server 322 arranged to communicate over a first communication channel with the management client entity 310 using a first SDN protocol. In some examples, this communication using a first SDN protocol uses NETCONF^{™} or RESTCONF^{™} protocols. However, it is envisaged that the concepts herein described will apply to other protocols. The main processing device 320 includes a second interface 319 for operably coupling to a target server 330 running on a constrained device 329 wherein the main processing device 320 comprises a target client 326 arranged to communicate over a second communication channel with the target server 330 using a second SDN protocol that is different to the first SDN protocol. In some examples, this second communication uses a CORECONF^{™} protocol. However, it is envisaged that the concepts herein described will apply to other protocols.

The constrained device 329 comprises a target server 330 that communicates with a SDN Agent 332, which monitors the operational state of the constrained device 329 and synchronizes its configuration with the main processing device 320 via the target server 330 and the second communication channel. In some examples, an SDN agent 332 implements the server side of SDN protocols. For example, the SDN agent 332 may be configured to receive the requests coming from the CNC 302 (which may be received indirectly rather than directly) and take the necessary action locally. In some examples, the SDN agent 332 taking the necessary action locally may be dependent upon the number of data stores implemented on the main processing device 320, that are mapped to the constrained device 329. In some examples, not all data stores may be required, for example, in a simplest scenario of having only one data store, protocol conversion can still be achieved.

In accordance with examples of the invention, a data store processor engine 324 is coupled to a data store 370 and one or more data models 380. In some examples of the invention the data store 370 contains operational data 230, candidate data 234, running data 236 and start up data 232, one example of which is defined in https://datatracker.ietf.org/doc/html/rfc8342 and incorporated herein by reference. In the context of some examples of the invention, operational data encompasses a read-only collection of configuration and state data. Running data encompasses the current configuration of the device. Candidate data does not directly affect the device but can become the running data through a 'commit' operation. Start-up data encompasses the configuration intended for use immediately after device start-up. In examples of the invention, data store operations are transparently passed through to the constrained (network device) 329, e.g., a MCU, that is not able to host a data store itself. The data store processor engine 324 is connected to the management server 322 and facilitates data store accesses by the management client 310 via the first communication channel and the management server 322, using NETCONF^{™} or RESTCONF^{™} protocols in this example. In this example, the data store processor engine 324 is also connected to the target client 326 and facilitates (operational) data node accesses by the target server 330.

Normally, a data store would be hosted on the same device where the hardware is located that is needed to be configured. With the constrained class of devices, such as MCUs, there is insufficient resource to include a large data store. However, in contrast to these known architectures, example embodiments of the invention propose employing a main processing device 320, e.g., an MCU, within a system that supports SDN, which includes a modified data store processor engine 324 that enables the constrained device 329 to communicate with a data store at a different place. In some examples of the invention, the adapted main processing device 320 includes a synchronization circuit 352 with a cache management 354 to enable the data store processor engine 324 to synchronize states and configuration data between data store 370 and a remote data store in the constrained device 329.

### Synchronization from the target server 330 to the data store 324:

In operation, for synchronization of states and configuration data between devices, i.e., from the target server 330 of the constrained (network device) 329 to the data store 370, a number of scenarios may be employed by the synchronization circuit 352 that comprises a cache management 354. For example, a first notification-based approach may be adopted, with a notification about a change e.g., in a running configuration 334, which is sent to the target client 326 (i.e., this is initiated by the target server 330) using the second SDN protocol. A second example in this direction, i.e., from the target server 330 to the data store 324 synchronization may be achieved without a notification-based approach, where the synchronization is performed by caching or by synchronization at the time the data is requested by the CNC 302. In this example, it is envisaged that cached instances may be required to be refreshed at a configurable rate/timeout, e.g., refreshed to contain up-to-date data; where data updating rates may be different in different scenarios. Furthermore, when reading persistent configuration data from the datastore 370, additional transactions with the target server 330 of the constrained (network) device 329 are not required, if the configuration data is synchronized with the running target (such data is considered cached and does not time out).

In some examples, it is envisaged that the caching may be configurable for individual instances of data nodes, for frequently accessed nodes or where low latency is required. In these examples, it is envisaged that the caching may be deactivated for data nodes that can change at run-time, and where no notifications are available, for example a data node that is constantly changing, such as a free running counter. In operation, in some examples, it is envisaged that data instances representing device states that are known not to change at run-time may be cached once, only at startup (with no timeout). In operation, in some examples, it is envisaged that cached data may be stored in an operational data store and or running data store. As one of many examples, let us consider a device identifier. Here, when employing the concepts described herein, the communication would be optimized, as accessing the constrained (network device) 329 would not be required in this case as a read operation from the data store 370 in the main processing device 320 would suffice.

It is known that notifications would normally require immediate delivery. However, if the receiving end of the notification is not available, the notification would be lost. Therefore, in accordance with some examples of the invention, using the main processing device 320 with a data store 370 configured to perform as an interface between the first SDN protocol and the second SDN protocol, it is envisaged that notifications may be buffered, and delivered whenever the receiver end of the notification becomes available. Such buffering may be performed in the data store 370 of the main processing device 320, so that the constrained device 329 advantageously does not have to keep track of the notification.

### Synchronization from the data store 324 to the target server 330:

In operation, for synchronization of states between the data store 370 and the target server 330, a number of further scenarios may be employed. For example, for transactions with a running data store or an operational data store, it is envisaged that the data store processor engine 324 may derive the most efficient way of forwarding this transaction request to the target device and trigger this using the target client 326. It is also envisaged in some examples that changes can be accumulated to perform multiple data accesses in a single command. In some examples, all other changes, e.g., to candidate data 234 in datastore 370, no action will be triggered.

Similarly, the adapted main processing device 320 includes a target device mapping circuit 356 coupled to the synchronization circuit 352. In some examples, the target device mapping circuit 356 comprises a lookup table 357, that indicates for each root node of data, what is the location (e.g., an internet protocol (IP) address or a URL) and what is the protocol used to get there. The target device mapping circuit 356 is configured to enable the data store processor engine 324 to determine the target device for each data node and its subnodes. In the context of SDN, data is organized in a hierarchical data model. The reference to 'data nodes and respective subnodes', as described herein, encompasses one or more root nodes in the overall model, where its children/branches would be referred to as subnodes, which would often lead to further children and branches, and so on. In this regard, the target device mapping circuit 356 and data store processor engine 324 communicate, for example, subtree request callback messages and subtree change callback messages 358. These messages 358 relate to a function that indicates that something has changed inside the data store 370, or a request to change something, for example that 'something' could be any subnode of a data model 380.

This target device can be an internal target device or an external target device., An internal target device may include a networking device that is part of a system on chip (SoC) in which the data store is hosted. An external target device may include a target device that requires configuring through an SDN protocol or similar means. If the device is an external target device, the synchronization of states between the data store 370 and the target server 330 will be performed through the target client 326 via a communication channel.

In some examples, the implementation of a main processing device 320, such as a main processor unit (MPU), that includes a data store 324 configured to perform as an interface between the first SDN protocol and the different second SDN protocol may facilitate bridging of protocols used for configuration and state retrieval. For example, bridging of protocols may be achieved if management client 310 and the target server 330 use different SDN protocols, e.g., NETCONF^{™} or RESTCONF^{™} protocols for the communication between the management client 310 and the main processing device 320, and say CORECONF^{™} protocol for the communication between the main processing device 320 and the constrained device comprising the target server 330.

It will be appreciated that the various components within the system 300 can be realized in discrete or integrated component form in an integrated circuit or system on chip architecture, with an ultimate structure therefore being an application-specific or design selection. Furthermore, a skilled artisan will appreciate that the level of integration of such circuits or components may be, in some instances, implementation-dependent.

In this manner, a system configured to support software-defined networking, SDN, is described that exposes a complex data store architecture to network configurators by running the data store on an unconstrained device, such as MPU class devices and synchronizing running configuration states 334 and operational states 336 with constrained devices (e.g., MCU) that are not capable of implementing a complex data store architecture.

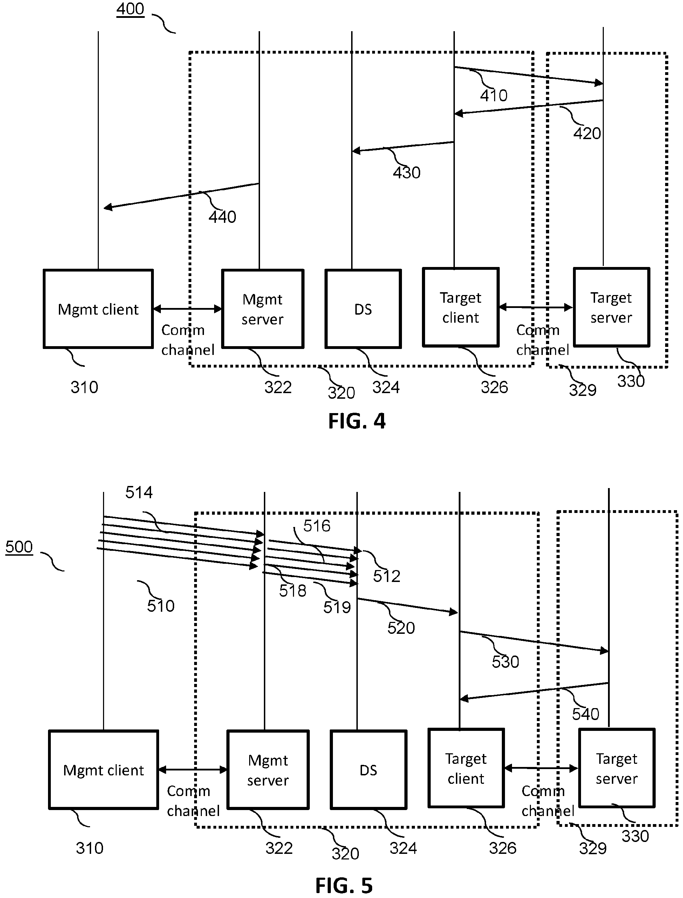

Referring now to FIG. 4, an adapted NETCONF^{™} start-up discovery process message sequence chart 400 is illustrated, according to example embodiments of the invention. The example adapted NETCONF^{™} start-up discovery process message sequence chart 400 identifies communications between a management client entity 310, over a communication channel using NETCONF^{™} or RESTCONF^{™} protocols in this example, to a main processing device 320, such as a main processor unit (MPU), that includes a management server 322 coupled to a data store 324 coupled to a target client 326. The main processing device 320 is also connected to a target server 330 running on a constrained device 329 by a second communication channel that uses a CORECONF protocol in this example. In accordance with some examples of the invention, the message sequence chart 400 starts at 410, with a '<GET> Module Library' instruction, which obtains the modules that are implemented in the target device, sent by the target client 326 to the target server 330. At 420, a 'Module Library (containing capabilities)' response is sent by the target server 330 to the target client 326. At 430, the target client 326 provides store capabilities to the datastore 324 (cached indefinitely). In this context, the reference to 'cached indefinitely' encompasses the data being cached such that it does not go stale, i.e., the data does not have to be refreshed ever. For example, this is the case for data where it is known that it does not change at run-time and it advantageously reduces the amount of transactions with the target device. At 440, management server 322 then sends a '<HELLO> capabilities incl. constr. Dev.' Message, which is a message that advertises the capabilities of the main processing device 320 and also the constrained device 329. In some examples, for a start-up discovery process, it is envisaged that the main processing device 320 may contain cached 'discovery information' located in the data store 370 and that the data can be discovered by the CNC 302 then, in order to reduce the required communication and processing load on the constrained device 329.

Referring now to FIG. 5, an adapted NETCONF^{™} re-configuration process message sequence chart 500 is illustrated, according to example embodiments of the invention. The example adapted NETCONF^{™} re-configuration process message sequence chart 500 identifies communications between a management client entity 310, over a communication channel to a main processing device 320, such as a main processor unit (MPU), that includes a management server 322 coupled to a data store 324 coupled to a target client 326. The main processing device 320 is also connected to a target server 330 running on the constrained device 329. In accordance with some examples of the invention, the message sequence chart 500 starts at 510, with a series of messages/instructions that are sent from the management client entity 310 to the management server 322 and thereafter the data store 324 in the main processing device 320. The series of messages/instructions include, namely: '<get-config> running' 512, '<edit-config> running' 514, '<lock> running' 516, '<lock> candidate' 518, and '<commit> candidate:running' 519. These messages 512-519 have the purpose of retrieving (get-config) device state information and managing (edit-config, commit, lock) the device configuration. At 520, the data store 324 sends a 'Config changed callback' message to the target client 326. At 530, the target client 326 sends a '<PUT> Configuration' message/instruction, which sends a configuration to the target device, i.e., to the target server 330 running on the constrained device 329. At 540, the target client 326 receives an acknowledgement message '<ACK>' response to acknowledge the configuration back from the target server 330.

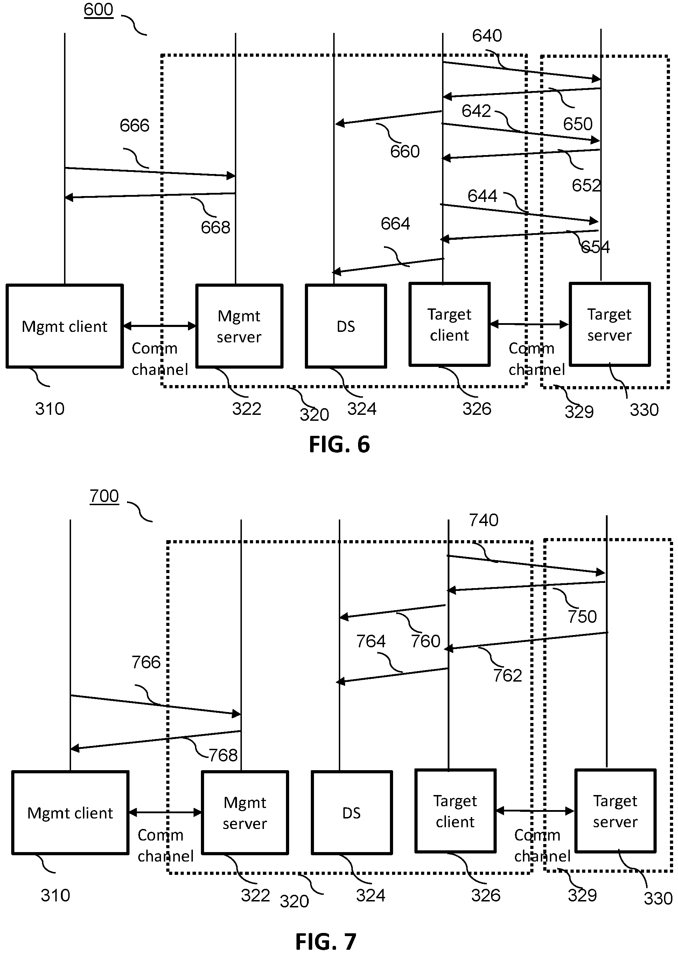

Referring now to FIG. 6, an adapted NETCONF^{™} state/configuration change by polling process message sequence chart 600 is illustrated, according to example embodiments of the invention. The example adapted NETCONF^{™} state/configuration change by polling process message sequence chart 600 identifies communications between a management client entity 310, over a communication channel to a main processing device 320, such as a main processor unit (MPU), that includes a management server 322 coupled to a data store 324 coupled to a target client 326. The main processing device 320 is also connected to a target server 330 running on a constrained device 329. In accordance with some examples of the invention, the message sequence chart 600 starts at 640, with the target client 326 sending a '<GET> data node' message to the target server 330 and receiving, at 650, a response therefrom of 'Data node instance = 1', which is an example response, saying that the value of the requested data node is '1'. At 660, in response thereto, the target client 326 sends a 'store in DS (cached indefinitely)' message to the datastore 324.

At 642, the target client 326 sends a second '<GET> data node' message to the target server 330 and receives at 652, a response therefrom of 'Data node instance = 1', which is an example response, saying that the value of the requested data node is '1' (which is why an additional store to DS is not needed). At 666, the management client 310 sends a '<get-config> running - data node' message, which is a message to obtain the value of data node from the running configuration message, to the management server 322. At 668, the management server 322 sends a 'Data node instance = 1' message, which is an example message indicating that the value of the data node is '1', to the management client 310.

At 644, the target client 326 sends a third <GET> data node' message, which is a request for a specific data node, to the target server 330 and receives at 654, a response therefrom of 'Data node instance = 3', which is an example response, saying that the value of the requested data node is '3'. At 664, in response thereto, the target client 326 sends a 'store in DS (cached indefinitely)' message to the datastore 324.

Referring now to FIG. 7, an adapted NETCONF^{™} state/configuration change by notification process message sequence chart 700 is illustrated, according to example embodiments of the invention. The example adapted NETCONF^{™} state/configuration change by notification process message sequence chart 700 identifies communications between a management client entity 310, over a communication channel to a main processing device 320, such as a main processor unit (MPU), that includes a management server 322 coupled to a data store 324 coupled to a target client 326. The main processing device 320 is also connected to a target server 330 running on a constrained device 329. In accordance with some examples of the invention, the message sequence chart 700 starts at 740, with the target client 326 sending a <GET> data node changes to the target server 330 and receiving, at 750, a response therefrom of a Data node instance changed to '1'. At 760, in response thereto, the target client 326 sends a 'store in DS (cached indefinitely)' message to the datastore 324.

At 762, the target client 326 receives a message from the target server 330 of 'Data node instance changed to '3'. At 764, in response thereto, the target client 326 sends a 'store in DS (cached indefinitely)' message to the datastore 324. At 766, the management client 310 sends a '<get-config> running - data node' message to the management server 322, which is a message to retrieve (i.e., get-configuration) device state information. At 768, the management server 322 sends a 'Data node instance = 3' message, which is an example message indicating that the value of the data node is '3', to the management client 310.

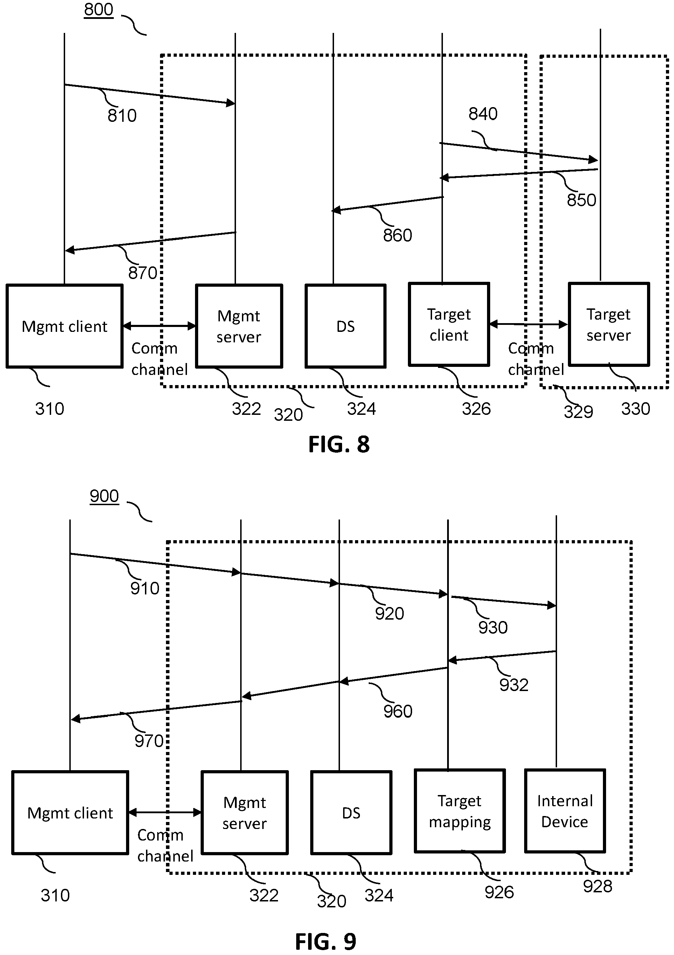

Referring now to FIG. 8, an adapted NETCONF^{™} state/configuration change with no caching process message sequence chart 800 is illustrated, according to example embodiments of the invention. The example adapted NETCONF^{™} state/configuration change with no caching process message sequence chart 800 identifies communications between a management client entity 310, over a communication channel to a main processing device 320, such as a main processor unit (MPU), that includes a management server 322 coupled to a data store 324 coupled to a target client 326. The main processing device 320 is also connected to a target server 330 running on a constrained device 329. In accordance with some examples of the invention, the message sequence chart 800 starts at 810, with the management client entity 310 sending a '<get-config> running - data node' message to the management server 322, which is a message to retrieve (i.e., get-configuration) device state information. At 840, the target client 326 sends a '<GET> data node' message to the target server 330 and receives at 850, a response therefrom of a 'Data node instance =3' message, which is an example response, saying that the value of the requested data node is '3'. At 860, in response thereto, the target client 326 sends a 'store in DS' message (as there is no caching in this example) to the datastore 324. At 870, in response thereto, the management server 322 sends a 'Data node instance = 3' message, which is an example response, saying that the value of the requested data node is '3', to the management client entity 310.

Referring now to FIG. 9, an adapted NETCONF^{™} target mapping to an internal device process message sequence chart 900 is illustrated, according to example embodiments of the invention. The example adapted NETCONF^{™} target mapping to an internal device process message sequence chart 900 identifies communications between a management client entity 310, over a communication channel to a main processing device 320, such as a main processor unit (MPU), that includes a management server 322 coupled to a data store 324 coupled to a target mapping circuit 926 coupled to an internal device 928 within the main processing device 320, e.g. a network controller-for which requesting data nodes information does not require connecting via a network. The main processing device 320 is also connected to a target server 330 running on a constrained device 329. In accordance with some examples of the invention, the message sequence chart 900 starts at 910, with the management client entity 310 sending a '<get-config> running - data node' message to the management server 322, which is a message to retrieve (i.e., get-configuration) device state information. This message is forwarded to the data store 324 and at 920, the type of device is checked to determine whether it is an external or an external device.

At 930, 932 the target mapping circuit 926 obtains data from the local (internal) device 928 and at 960 the obtained data is store in in the data store 324. The management server 322 sends, at 970, a 'Data node instance = 1' message, which is an example message indicating that the value of the data node is '1', to the management client entity 310.

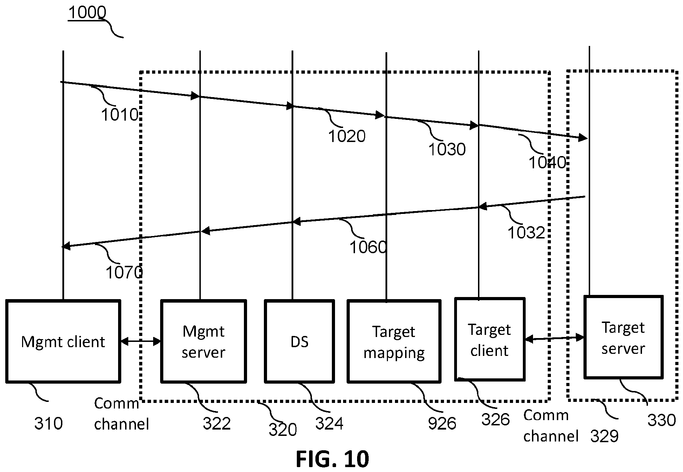

Referring now to FIG. 10, an adapted NETCONF^{™} target mapping to an external device process message sequence chart 1000 is illustrated, according to example embodiments of the invention. The example adapted NETCONF^{™} target mapping to an external device process message sequence chart 1000 identifies communications between a management client entity 310, over a communication channel to a main processing device 320, such as a main processor unit (MPU), that includes a management server 322 coupled to a data store 324 coupled to a target mapping circuit 926 coupled to a target client 326. The main processing device 320 is also connected to a target server 330 running on a constrained (network) device 329. In accordance with some examples of the invention, the message sequence chart 1000 starts at 1010, with the management client entity 310 sending a '<get-config> running - data node' message to the management server 322, which is a message to retrieve (i.e., get-configuration) device state information. This message is forwarded to the data store 324 and at 1020, the type of constrained (network) device 329 is checked.

At 1030, the target mapping circuit 926 determines that the action requires handling externally and informs the target client 326 of the type of constrained (network) device 329. At 1040, 1032, the target client 326 obtains the data (e.g., 'data mode instance =1') from target server 330. At 1060 the obtained data is store in in the data store 324. The management server 322 sends, at 1070, a 'Data node instance = 1' message, which is an example message that indicates, the value of the requested data node is '1', to the management client entity 310.

Although examples of the invention are described with reference to hardware devices throughout the system that employ, inter-alia, one or more generic or specialized processors (or 'signal processors'), it is envisaged that the concepts herein described may be performed using microprocessors, digital signal processors, customized processors and/or field programmable gate arrays (FPGAs), for example with unique stored program instructions (including both software and firmware) that control the one or more processors to implement, in conjunction with certain non-processor circuits. Alternatively, it is envisaged that some or all functions may be implemented in one or more application specific integrated circuits (ASICs), in which each function or some combinations of certain of the functions are implemented as custom logic. It is also envisaged that a combination of the two approaches may be used in some examples. In some examples, it is envisaged that the concepts herein described may be employed in software on the constrained device, and in some examples the concepts of the main processing device may be implemented as hardware, software, firmware or any combination thereof.

In the foregoing specification, the invention has been described with reference to specific examples of embodiments of the invention. It will, however, be evident that various modifications and changes may be made therein without departing from the scope of the invention as set forth in the appended claims and that the claims are not limited to the specific examples described above.

The connections as discussed herein may be any type of connection suitable to transfer signals from or to the respective nodes, units or devices, for example via intermediate devices. Accordingly, unless implied or stated otherwise, the connections may for example be direct connections or indirect connections. The connections may be illustrated or described in reference to being a single connection, a plurality of connections, unidirectional connections, or bidirectional connections. However, different embodiments may vary the implementation of the connections. For example, separate unidirectional connections may be used rather than bidirectional connections and vice versa. Also, plurality of connections may be replaced with a single connection that transfers multiple signals serially or in a time multiplexed manner. Likewise, single connections carrying multiple signals may be separated out into various different connections carrying subsets of these signals. Therefore, many options exist for transferring signals.

Those skilled in the art will recognize that the architectures depicted herein are merely exemplary, and that in fact many other architectures can be implemented which achieve the same functionality. Any arrangement of components to achieve the same functionality is effectively 'associated' such that the desired functionality is achieved. Hence, any two components herein combined to achieve a particular functionality can be seen as associated with' each other such that the desired functionality is achieved, irrespective of architectures or intermediary components. Likewise, any two components so associated can also be viewed as being 'operably connected,' or 'operably coupled,' to each other to achieve the desired functionality.

Furthermore, those skilled in the art will recognize that boundaries between the above-described operations merely illustrative. The multiple operations may be combined into a single operation, a single operation may be distributed in additional operations and operations may be executed at least partially overlapping in time. Moreover, alternative embodiments may include multiple instances of a particular operation, and the order of operations may be altered in various other embodiments.

Also, for example, in one embodiment, the illustrated examples may be implemented as circuitry located on a single integrated circuit or within a same device. Alternatively, the circuit and/or component examples may be implemented as any number of separate integrated circuits or separate devices interconnected with each other in a suitable manner. Additionally, for example, the examples, or portions thereof, may implemented as soft or code representations of physical circuitry or of logical representations convertible into physical circuitry, such as in a hardware description language of any appropriate type. Furthermore, examples of the invention are not limited to physical devices or units implemented in non-programmable hardware but can also be applied in programmable devices or units able to perform the desired target device mapping and synchronization. It is envisaged that other modifications, variations and alternatives are also possible that fall within the scope of the claims. The specifications and drawings are, accordingly, to be regarded in an illustrative rather than in a restrictive sense.

In the claims, any reference signs placed between parentheses shall not be construed as limiting the claim. The word 'comprising' does not exclude the presence of other elements or steps then those listed in a claim. Furthermore, the terms 'a' or 'an,' as used herein, are defined as one or more than one. Also, the use of introductory phrases such as 'at least one' and 'one or more' in the claims should not be construed to imply that the introduction of another claim element by the indefinite articles 'a' or 'an' limits any particular claim containing such introduced claim element to inventions containing only one such element, even when the same claim includes the introductory phrases 'one or more' or 'at least one' and indefinite articles such as 'a' or 'an.' The same holds true for the use of definite articles. Unless stated otherwise, terms such as 'first' and 'second' are used to arbitrarily distinguish between the elements such terms describe. Thus, these terms are not necessarily intended to indicate temporal or other prioritization of such elements. The mere fact that certain measures are recited in mutually different claims does not indicate that a combination of these measures cannot be used to advantage.

## Claims

1. A system configured to support software-defined networking, SDN, the system comprising:
a management client entity (310);
a main processing device (220, 320) operably connected to the management client entity (310) and arranged to communicate with the management client entity (310) using a first SDN protocol;
a target server (330) running on a constrained device (228, 329) operably connected to the main processing device (220, 320) and arranged to communicate with the main processing device (320) using a second SDN protocol (242) that is different to the first SDN protocol;
wherein the system is **characterised in that** the main processing device (220, 320), comprises a data store (370) configured to perform as an interface between the first SDN protocol and the second SDN protocol (242).

2. The system of Claim 1 wherein SDN data is organized in a hierarchical data model, that comprises data nodes and respective subnodes connected to the data nodes, and the main processing device (320) comprises a target device mapping circuit (356) coupled to a data store processor engine (324), wherein the target device mapping circuit (356) is configured to determine a target device for each data node and respective subnodes.

3. The system of Claim 2, wherein the target device mapping circuit (356) comprises a lookup table (357) that stores values to indicate, for each node of data, an address of the data and a protocol used to access the data.

4. The system of any preceding Claim wherein the main processing device (220, 320) comprises a synchronization circuit (352) comprising a cache management (354).

5. The system of Claim 4, wherein the synchronization circuit (352) is configured to:
read an operational state (336) of the constrained device (228, 329) from the constrained device (228, 329) using the second SDN protocol (242);
receive and load into the data store (370) the operational state (336) of the constrained device (228, 329); and
synchronize the operational state (336) of the constrained device (228, 329) to the main processing device (220, 320) so that the operational state (336) of the constrained device (228, 329) is readable directly from data store (370).

6. The system of Claim 5 wherein the operational state (336) of the constrained device (228, 329) is synchronized with the main processing device (220, 320) via an uni-directional communication link (240) to maintain synchronization therebetween.

7. The system of Claim 4, wherein the synchronization circuit (352) is configured to perform at least one of:
read running configuration data (334) from the constrained device (228, 329) using the second SDN protocol (242); receive and load into the data store (370) the running configuration data (334) of the constrained device (228, 329); and synchronize the running configuration data (334) of the constrained device (228, 329) to the main processing device (220, 320) so that the running configuration data (334) of the constrained device (228, 329) is readable directly from data store (370);
send running configuration data (334) of the main processing device (320) to the constrained device (228, 329) using the second SDN protocol (242); and synchronize the running configuration data (334) of the constrained device (228, 329) to the main processing device (220, 320).

8. The system of Claim 7 wherein the running configuration data (252, 334) of the constrained device (228, 329) is synchronized with the main processing device (220, 320) via a bi-directional communication link (244) to maintain synchronization therebetween.

9. The system of Claim 4, wherein the synchronization circuit (352) is configured to:
load at least one startup configuration in the constrained device (228, 329) using the second SDN protocol (242),
receive and load into the data store (370) the at least one startup configuration of the constrained device (228, 329); and
synchronize to the at least one startup configuration of the constrained device (228, 329) so that the at least one startup configuration of the constrained device (228, 329) is readable directly from data store (370).

10. The system of any preceding Claim wherein the main processing device (220, 320) is configured to bridge data communications, for at least one of: configuration data and state retrieval data, between the first SDN protocol employed by the management client entity (310) and the different second SDN protocol employed by constrained device (228, 329).

11. The system of any preceding Claim wherein at least one of the following applies:
the first SDN protocol is used to perform actions towards datastores;
the first SDN protocol is a NETCONF^{™} protocol or RESTCONF^{™} protocol;
the second different SDN protocol is used to manage the constrained device (228, 329); and
the second different SDN protocol is a CORECONF^{™} protocol.

12. The system of any preceding Claim wherein the main processing device (320) comprises start-up discovery information cached in the data store (370) and discoverable by the management client entity (310).

13. The system of any preceding Claim wherein the main processing device (320) and data store (370) are configured to buffer received notification messages and deliver the buffered notifications when access to the constrained device (329) becomes available.

14. A processing device (220, 320) comprising:
a first interface (321) for operably coupling to a management client entity (310) wherein the processing device (220, 320) is arranged to communicate with the management client entity (310) using a first SDN protocol; and
a second interface (319) for operably coupling to a target server (330) running on a constrained device (228, 329) wherein the processing device (220, 320) is arranged to communicate with the target server (330) using a second SDN protocol (242) that is different to the first SDN protocol;
wherein the processing device (220, 320) is **characterised by** a data store (370) configured to perform as an interface between the first SDN protocol and the second SDN protocol (242).

15. A method of supporting software-defined networking, SDN, communications in a system that comprises a management client entity (310), a main processing device (220, 320) and a target server (330) running on a constrained device (228, 329), the method comprising:
communicating between the main processing device (220, 320) and the management client entity (310) using a first SDN protocol;
communicating between the main processing device (320) and the target server (330) using a second SDN protocol (242) that is different to the first SDN protocol; and
configuring a data store (370) located in the main processing device (220, 320) to perform as an interface between the first SDN protocol and the second SDN protocol (242).
